# DEMANDE DE BREVET EUROPEEN

(11) **EP 2 395 634 A1**
(43) Date de publication de la demande: **14.12.2011**
(21) Numéro de dépôt: 11305713.7
(22) Date de dépôt: 09.06.2011
(51) Int. Cl.: H02K 5/22, H02K 11/00, H02K 5/24

(54) **Dispositif applicatif intégré dans une structure mécanique motorisée pour la manutention et convoyage de palettes et l'installation résultante**

(30) Priorité: 11.06.2010 FR 1054618
(71) Demandeur: AXORIS, 71260 Charbonnières (FR)
(72) Inventeur: Bouley, Jean Philippe, 71260 CHARBONNIERES (FR)
(74) Mandataire: Dupuis, François

(57) **Abrégé**

Le dispositif applicatif associé à une structure mécanique motorisée, se caractérise par son application relative à la manutention et au convoyage de palettes et charges isolées et de la gestion de leur déplacement relatif, et en ce que le dispositif est constitué par une boîte à bornes intégrée et aménagée pour être fixée sur une partie de liaison d'un corps de moteur, et en ce que la boîte à bornes est conçue en deux parties séparées par des moyens d'isolation thermique, et en ce que la partie inférieure de la boîte à bornes présente une zone de fixation et de pré-positionnement sur le corps du groupe moteur, et inclut un moyen de protection contre les interférences électromagnétiques, et en ce que la partie inférieure de la boîte à bornes comprend des moyens à fonction antivibratoire, et en ce que la partie supérieure de la boîte à bornes est agencée pour la réception d'une électronique de commande embarquée incluant une ou des cartes électroniques, et une zone de positionnement de l'électronique de puissance, et en ce que le boîtier à bornes comprend des moyens d'arrivée de capteurs-cellules et voyants, et un moyen d'alimentation avec le groupe moteur, et en ce que la boîte à bornes comprend en partie basse de sa partie supérieure un moyen (12) permettant la dissipation de l'énergie de puissance et de commutation.

## Description

L'invention se rattache au secteur technique des systèmes de commande qui sont associés à des groupes moteurs intégrant différents accessoires et composants extérieurs de programmation, de captage.

La problématique est la suivante :
A la connaissance du Demandeur, la gestion dans certaines applications nécessitant des moyens de captage, de régulation, requiert l'utilisation de groupes moteurs (a) asynchrones, moteurs sans balai, générateurs qui sont reliés à des capteurs (b), des contacteurs (c), des voyants (d) et généralement de composants électrotechniques, automate programmable (e) avec station développement (g), le tout étant relié par des moyens de câblages et de connexions (f) appropriés. Le moyen de protection température moteur est référencé par (h). Tous ces éléments et composants sont indépendants les uns des autres et séparés en se trouvant en fonction des applications concernées à des endroits éloignés.

Dans le cadre de la manutention de palettes sur des convoyeurs, ces différents constituants sont éparpillés le long du cheminement des produits de sorte que l'utilisateur en maintenance perd un temps substantiel dans l'examen, le réglage, l'entretien des dits composants. Le câblage est complexe et peut être gênant dans l'environnement immédiat d'utilisation.

La démarche du Demandeur a donc été de rechercher à optimiser ce type d'agencement en regroupant l'ensemble des supports et composants dans un même lieu et en réduisant ainsi de manière substantielle les coûts de câblage et les temps de maintenance et d'installation dans l'application relative à la manutention et au convoyage de palettes.

Il est connu par ailleurs que les moteurs asynchrones et les moteurs électriques en général sont agencés avec une boîte à bornes sur leur partie supérieure apparente afin d'assurer des connexions. Ces boîtes à bornes ont un usage limité et sont simplement agencées pour le raccordement électrique du groupe moteur à un réseau.

On connaît par exemple dans le brevet EP 1 895 642 l'utilisation d'une boîte à bornes destinée à accueillir un variateur de fréquence chargé uniquement de faire varier la vitesse de rotation d'un moteur asynchrone triphasé supportant cette dite boîte à bornes.
Cette boîte à bornes est limitée aux moteurs de la firme SEW déposante.

On connaît par le brevet EP 2 116 724 une boîte à bornes utilisée spécifiquement pour des compresseurs d'air conditionné électriquement dans le domaine de l'automobile utilisant des moteurs à courant continu.

Les documents EP 1 895 642 et EP 2 116 724 ne suggèrent aucunement de donner à la boîte à bornes une gestion automatisée autonome de certaines fonctions.

La démarche du Demandeur a été de considérer le domaine de la manutention et du convoyage de palettes et de charges isolées pour lequel la problématique a été rappelée précédemment.

Dans le cadre de sa démarche, le Demandeur s'est intéressé à regrouper toutes les fonctions pour l'application manutention-convoyage de palettes et charges isolées avec le groupe moteur. Cette démarche a alors amené le Demandeur à concevoir une nouvelle boîte à bornes permettant la mise en oeuvre de l'invention. En effet, les caractéristiques connues du ou des blocs moteurs, du ou des composants du type contacteurs, capteurs et autres, restent incompatibles de par les contraintes liées à la protection vibratoire de l'électronique embarquée, de la protection électromagnétique nécessaire à un bon usage des composants.

La solution apportée par le Demandeur répond à cet objectif de manière satisfaisante en s'adaptant et pouvant équiper tous types de moteurs électriques, asynchrones et similaires.

Selon une première caractéristique de l'invention, le dispositif applicatif associé à une structure mécanique motorisée est remarquable par son application relative à la manutention et au convoyage de palettes et charges isolées et de la gestion de leur déplacement relatif, et en ce que le dispositif est constitué par une boîte à bornes intégrée et aménagée pour être fixée sur une partie de liaison d'un corps de moteur, et en ce que la boîte à bornes est conçue en deux parties séparées par des moyens d'isolation thermique, et en ce que la partie inférieure de la boîte à bornes présente une zone de fixation et de pré-positionnement sur le corps du groupe moteur, et inclut un moyen de protection contre les interférences électromagnétiques, et en ce que la partie inférieure de la boîte à bornes comprend des moyens à fonction antivibratoire, et en ce que la partie supérieure de la boîte à bornes est agencée pour la réception d'une électronique de commande embarquée incluant une ou des cartes électroniques, et une zone de positionnement de l'électronique de puissance, et en ce que le boîtier à bornes comprend des moyens d'arrivée de capteurs-cellules et voyants, et un moyen d'alimentation avec le groupe moteur.

Ces caractéristiques et bien d'autres encore ressortiront bien de la suite de la description.

Pour fixer l'objet de l'invention illustré d'une manière non limitative aux figures des dessins où :

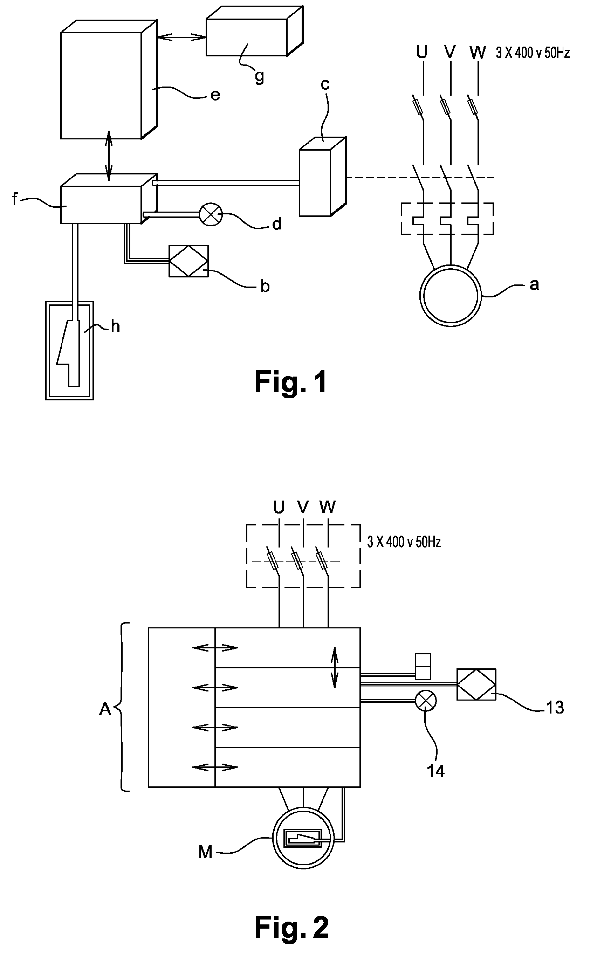

La figure 1 est une vue à caractère schématique illustrant à titre d'exemple selon l'art antérieur la configuration indépendante d'une installation incluant un groupe moteur et des accessoires et composants du type automates programmables, de captages, de réglages, de cellules, de contacteurs de commande pouvant être rangés dans des armoires appropriées avec utilisation de câblage de liaison,
La figure 2 est une vue à titre schématique du dispositif applicatif selon l'invention intégrant dans une boîte à bornes spécifiques associée à un groupe moteur les différents composants nécessaires à l'application,

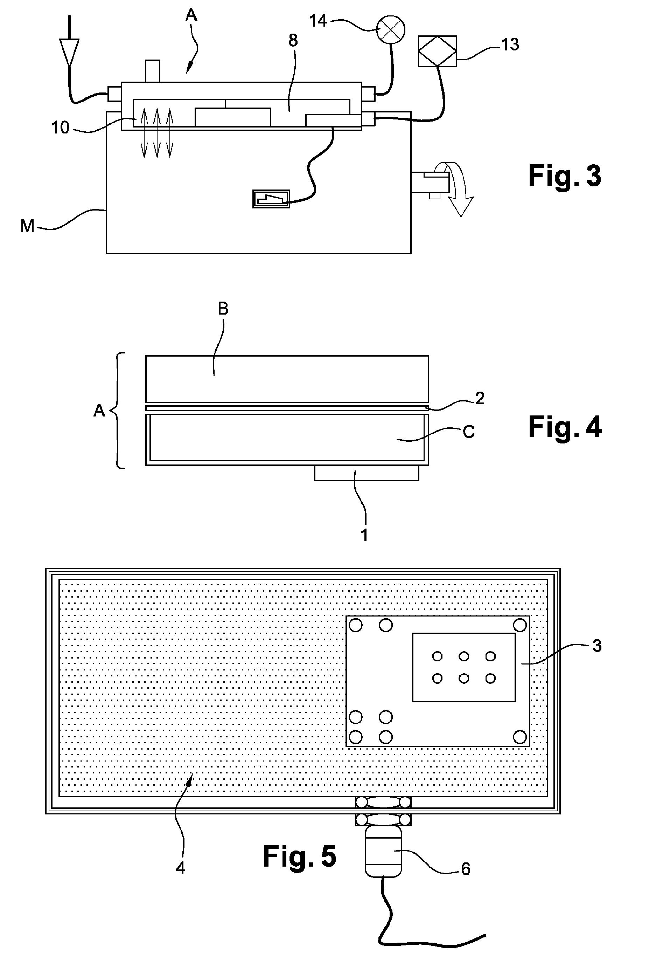

La figure 3 est une vue une vue à caractère schématique représentant la boîte à bornes et le groupe moteur,
La figure 4 est une vue à caractère schématique illustrant la boîte à borne selon l'invention,
La figure 5 est une vue partielle selon la figure 4 représentant la partie inférieure de la boîte à bornes assurant différentes fonctions notamment de protection antivibratoire d'une électronique embarquée, la protection mécanique, la protection électromagnétique et les arrivées de câbles,

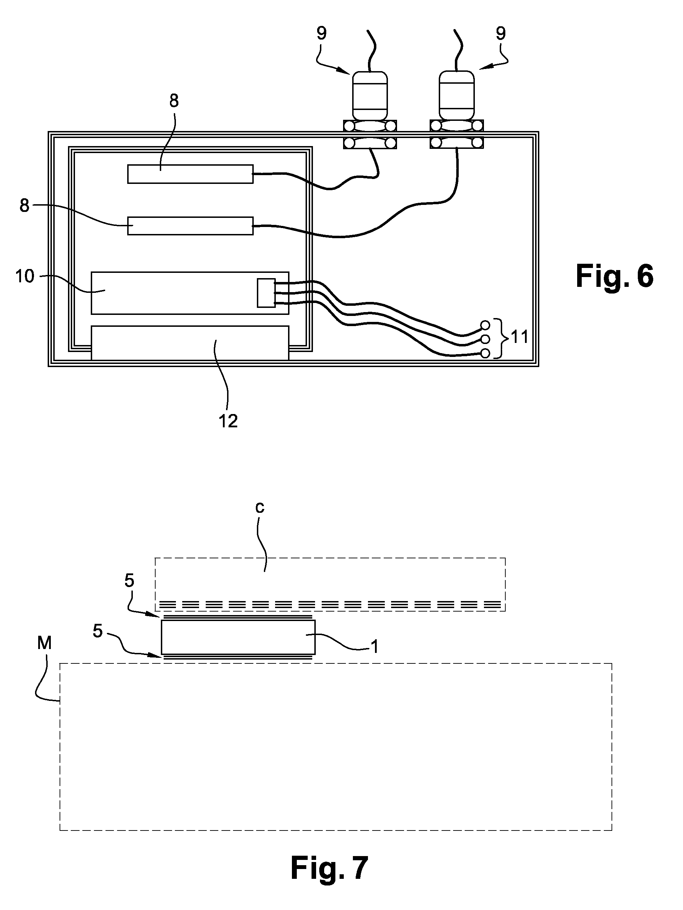

La figure 6 est une vue selon la figure 4 illustrant la partie supérieure de la boîte à bornes réceptrice de l'électronique embarquée,
La figure 7 est une vue partielle à caractère schématique illustrant l'adaptation de la partie inférieure de la boîte à bornes par rapport au groupe moteur,

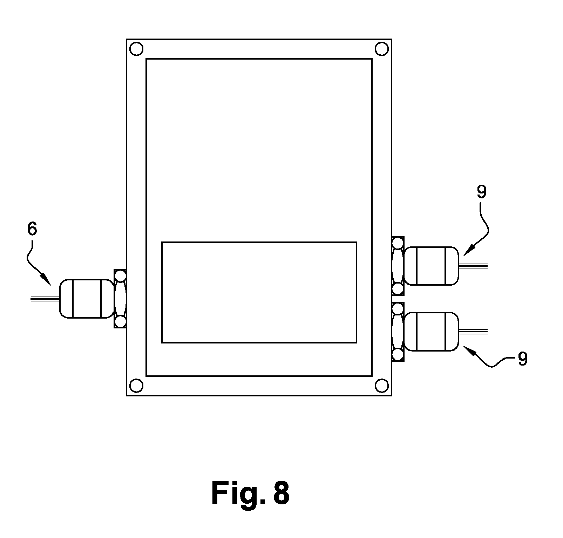

La figure 8 est une vue de dessus à caractère schématique de la boîte à bornes.

Afin de rendre plus concret l'objet de l'invention, on le décrit maintenant d'une manière non limitative illustré aux figures des dessins.

L'invention vise son application à la manutention et au convoyage de palettes et de charges isolées et de la gestion de leur déplacement relatif.

Le dispositif applicatif intégré dans une structure mécanique motorisée est constitué par une boîte à bornes (A) qui est aménagée spécifiquement et qui est destinée à être positionnée et fixée par une partie de liaison (1) sur le corps d'un moteur (M). Cette boîte à bornes est conçue en deux parties (B) et (C) qui sont séparées l'une de l'autre par des moyens d'isolation (2). La partie inférieure est liée à la partie de fixation sur le corps du groupe moteur d'une manière fixe et démontable selon les besoins et par tous moyens de liaisons appropriés. Cette partie inférieure présente ainsi une zone de fixation (3) et de pré-positionnement de la semelle de fixation sur le corps du groupe moteur. Elle reçoit dans son fond un moyen de protection (4) établi sous forme de plaque par exemple susceptible d'empêcher les interférences électromagnétiques et courant de Foucault entre le groupe moteur et l'électronique embarquée disposée dans la partie supérieure (B) de la boîte à bornes. La partie inférieure (C) de la boîte à bornes est aussi agencée pour assurer une fonction antivibratoire de l'électronique embarquée à l'aide de moyens (5) disposés à cet effet en séparation respectivement entre les parties (C) de la boîte à bornes et de la zone de jonction avec le bloc moteur, et la dite zone de jonction et le bloc moteur lui-même. La partie inférieure (C) est susceptible de recevoir le cordon d'alimentation (6) relié au bloc moteur. La partie supérieure (B) de la boîte à bornes est agencée intérieurement pour recevoir notamment l'électronique de commande embarquée en incluant une ou des cartes électroniques (8) à processeur numérique spécifique à l'application considérée et donc préenregistrés et réglés. Cette électronique de commande permet la gestion localisée de tout ou partie de l'application.

Cette ou ces cartes électroniques sont reliées à des arrivées (9) de capteurs cellules (13) et voyants (14). Sous-jacente à la ou les cartes est prévue une zone de positionnement de l'électronique de puissance intégrée (10). Cette dernière est reliée à des connecteurs (11) de puissance-moteur. En outre, en partie basse de la partie supérieure du boîtier à bornes est prévu un moyen (12) permettant la dissipation de l'énergie de puissance et de commutation pour réduire et limiter les transferts thermiques.

Ainsi, selon l'invention, le groupe moteur et la boîte à bornes spécifiques à l'invention forment un tout et cela permet une meilleure gestion et maintenance de l'ensemble. Il y a ensuite une réduction du nombre de composants, et une limitation substantielle du câblage, avec un seul câble électrique pour la puissance, la commande et l'alimentation de l'ensemble

Ainsi l'invention vise une installation pour la manutention et le convoyage de palettes et de charges isolées comprenant un dispositif applicateur intégré autonome incluant une boîte à bornes, le dispositif applicatif associé à une structure mécanique motorisée, caractérisé par son application relative à la manutention et au convoyage de palettes et charges isolées et de la gestion de leur déplacement relatif, et en ce que le dispositif est constitué par une boîte à bornes intégrée et aménagée pour être fixée sur une partie de liaison d'un corps de moteur, et en ce que la boîte à bornes est conçue en deux parties séparées par des moyens d'isolation thermique, et en ce que la partie inférieure de la boîte à bornes présente une zone de fixation et de pré-positionnement sur le corps du groupe moteur, et inclut un moyen de protection contre les interférences électromagnétiques, et en ce que la partie inférieure de la boîte à bornes comprend des moyens à fonction antivibratoire, et en ce que la partie supérieure de la boîte à bornes est agencée pour la réception d'une électronique de commande embarquée incluant une ou des cartes électroniques, et une zone de positionnement de l'électronique de puissance, et en ce que le boîtier à bornes comprend des moyens d'arrivée de capteurs-cellules et voyants, et un moyen d'alimentation avec le groupe moteur, et en ce que la boîte à bornes comprend en partie basse de sa partie supérieure un moyen (12) permettant la dissipation de l'énergie de puissance et de commutation.

Les avantages ressortent bien de l'invention et en particulier on souligne l'adaptabilité de la boîte à bornes sur tout ensemble de groupes moteurs, la possibilité de modifier en fonction des besoins la ou les cartes électroniques, et d'en assurer les réglages les plus appropriés. La conception de la boîte à bornes fait qu'elle est aménagée pour répondre de manière satisfaisante aux différentes contraintes environnementales, électromagnétiques, vibratoires, d'échauffement inhérent aux changements d'applications par rapport aux boîtes à bornes classiques de l'art antérieur.

La boîte à bornes, selon l'invention, dans l'application visée, permet d'accueillir une carte électronique spécifique regroupant toutes les fonctions AUTOMATE et commande puissance moteur, avec une gestion intégrée des entrées-sorties de type tout ou rien et au sein duquel est téléchargé un logiciel dédié à l'application et d'assurer une gestion automatisée.

L'utilisation de cette boîte à bornes est parfaitement adaptée à une utilisation dans le cadre de la gestion de la manutention de palettes entre autre et permet en téléchargeant uniquement une nouvelle partie applicative de pouvoir s'adapter à tous besoins en relation avec une réduction des coûts matériels et humains apportant de ce fait un impact environnemental bien moindre que les solutions classiques utilisées à ce jour.

## Revendications

1. Dispositif applicatif associé à une structure mécanique motorisée, **caractérisé par** son application relative à la manutention et au convoyage de palettes et charges isolées et de la gestion de leur déplacement relatif, et en ce que le dispositif est constitué par une boîte à bornes (A) intégrée et aménagée pour être fixée sur une partie de liaison (1) d'un corps de moteur (M), et en ce que la boîte à bornes est conçue en deux parties (B) et (C) séparées par des moyens d'isolation thermique (2), et en ce que la partie inférieure de la boîte à bornes présente une zone de fixation (3) et de pré-positionnement sur le corps du groupe moteur, et inclut un moyen (4) de protection contre les interférences électromagnétiques, et en ce que la partie inférieure (C) de la boîte à bornes comprend des moyens (5) à fonction antivibratoire, et en ce que la partie supérieure (B) de la boîte à bornes est agencée pour la réception d'une électronique de commande embarquée incluant une ou des cartes électroniques (8), et une zone de positionnement de l'électronique de puissance (10), et en ce que le boîtier à bornes comprend des moyens d'arrivée (9) de capteurs-cellules (13) et voyants (14), et un moyen (6) d'alimentation avec le groupe moteur, et en ce que la boîte à bornes comprend en partie basse de sa partie supérieure un moyen (12) permettant la dissipation de l'énergie de puissance et de commutation.

2. Installation pour le convoyage et la manutention de palettes et de charges isolées, **caractérisée en ce qu'**elle comprend un dispositif applicateur intégré autonome incluant une boîte à bornes, et **en ce que** le dispositif est constitué par une boîte à bornes (A) intégrée et aménagée pour être fixée sur une partie de liaison (1) d'un corps de moteur (M), et **en ce que** la boîte à bornes est conçue en deux parties (B) et (C) séparées par des moyens d'isolation thermique (2), et **en ce que** la partie inférieure de la boîte à bornes présente une zone de fixation (3) et de pré-positionnement sur le corps du groupe moteur, et inclut un moyen (4) de protection contre les interférences électromagnétiques, et **en ce que** la partie inférieure (C) de la boîte à bornes comprend des moyens (5) à fonction antivibratoire, et **en ce que** la partie supérieure (B) de la boîte à bornes est agencée pour la réception d'une électronique de commande embarquée incluant une ou des cartes électroniques (8), et une zone de positionnement de l'électronique de puissance (10), et **en ce que** le boîtier à bornes comprend des moyens d'arrivée (9) de capteurs-cellules (13) et voyants (14), et un moyen (6) d'alimentation avec le groupe moteur, et **en ce que** la boîte à bornes comprend en partie basse de sa partie supérieure un moyen (12) permettant la dissipation de l'énergie de puissance et de commutation.
